Europäisches Patentamt

European Patent Office

Office européen des brevets

(19)

(11) Veröffentlichungsnummer : **0 477 180 B1**

(12) **EUROPÄISCHE PATENTSCHRIFT**

(45) Veröffentlichungstag der Patentschrift :
24.08.94 Patentblatt 94/34

(51) Int. Cl.$^5$ : **H04L 9/32**, H04L 9/08

(21) Anmeldenummer : 90905428.0

(22) Anmeldetag : 05.04.90

(86) Internationale Anmeldenummer :
PCT/DE90/00270

(87) Internationale Veröffentlichungsnummer :
WO 90/16124 27.12.90 Gazette 90/29

(54) SCHLÜSSELVERTEILUNG IN OFFENEN KOMMUNIKATIONSNETZEN UNTER BERÜCKSICHTIGUNG VON SICHERHEITSABSTUFUNGEN.

(30) Priorität : 16.06.89 DE 3919734

(43) Veröffentlichungstag der Anmeldung :
01.04.92 Patentblatt 92/14

(45) Bekanntmachung des Hinweises auf die
Patenterteilung :
24.08.94 Patentblatt 94/34

(84) Benannte Vertragsstaaten :
CH DE DK FR GB LI NL SE

(56) Entgegenhaltungen :
EP-A- 48 903
EP-A- 205 095
EP-A- 307 627

(73) Patentinhaber : SIEMENS
AKTIENGESELLSCHAFT
Wittelsbacherplatz 2
D-80333 München (DE)

(72) Erfinder : MARKWITZ, Wernhard
Reichenbachstrasse 25
D-8000 München 5 (DE)

EP 0 477 180 B1

## Beschreibung

Die Erfindung betrifft eine Anordnung und ein Verfahren zur Schlüsselübertragung gemäß dem Oberbegriff des Patentanspruches 1 bzw. 7.

Bei Kommunikationsnetzen mit einem dienstintegrierten Netz, wie es zum Beispiel ISDN darstellt, werden Sprache, Text, Daten und Bilder auf digitaler Basis über eine Leitung übertragen. Alle Dienste eines Teilnehmers sind am selben Teilnehmer-Hauptanschluß über dieselbe Rufnummer erreichbar. Dies ermöglicht einen flexiblen und vielseitigen Datenaustausch zwischen den verschiedenen Teilnehmern, wobei gerade die Vielseitigkeit der verschiedenen angebotenen Dienste das Bedürfnis weckt, neben offenen auch verschlüsselte Nachrichten und Daten auszutauschen. Die Kenntnisnahme der Nachrichten und Daten durch Dritte soll dabei erschwert sein.

Zur Verschlüsselung der Daten sind verschiedene Verschlüsselungsverfahren bekannt, zum Beispiel symmetrische Verschlüsselungsverfahren oder Verschlüsselungsverfahren mit sog. öffentlichen Schlüsseln (public keys). Daneben sind als Verschlüsselungsverfahren insbesondere das Drei-Pass-Protokoll (US-Patentschrift 45 67 600, US-Patentschrift 45 87 627) und zum Beispiel das Verfahren mit einer Parole (Deutsche Patentschrift 31 23 168) von Bedeutung.

Die verwendeten Verschlüsselungsverfahren müssen dabei derart sein, daß die verschiedenen Dienste des Netzes voll erhalten bleiben, wie zum Beispiel Konferenzverbindungen, Kurzruf und zum Beispiel über Namenstaster verkürzter Verbindungsaufbau durch Speicherung der häufig gewählten Verbindungen.

Um die Authentizität der Teilnehmer, d.h. den Nachweis, daß die Übertragung tatsächlich mit dem gewünschten Teilnehmer erfolgte, sicherzustellen, ist es üblich, im Netz eine Schlüsselverteilerzentrale auf Basis der Public-Key-Systeme vorzusehen, in dem die Schlüssel zur Übertragung erzeugt und verteilt werden. Außerdem müssen dort sämtliche Rufnummern und die dazugehörigen Public Keys aller Teilnehmer gepflegt werden.

Derartige Schlüsselverteilerzentralen stellen den Hauptangriffspunkt und die Sicherheitsschwachstelle des gesamten Netzes dar. Es ist deshalb notwendig, sie aufwendig zu sichern.

Bei Kommunikationsnetzen für mehrere Kommunikationsdienste besteht außerdem der Wunsch, den verwendeten Diensten angepaßte Sicherungsverfahren mit unterschiedlichen Sicherheitsstufen einsetzen zu können. So sollte für den Telefondienst ein besonders einfach handhabbares System zur Anwendung kommen, das die Kommunikation nicht behindert. Für die anderen Dienste, wie Text und Daten, wäre ein automatisch ablaufendes Sicherungsverfahren von Vorteil.

Aufgabe der Erfindung ist es, eine Anordnung und ein Verfahren der eingangs genannten Art bereitzustellen, mit der es ohne größeren Aufwand und ohne Verlust an Sicherheit möglich ist, neben der Vertraulichkeit auch die Authentizität der Teilnehmer Sicherzustellen.

Diese Aufgabe wird bei einer Anordnung bzw. einem Verfahren der eingangs genannten Art gemäß dem kennzeichnenden Teil des Patentanspruchs 1 bzw. 7 gelöst.

Vorteilhafte Ausführungsformen der Erfindung sind in den abhängigen Ansprüchen gekennzeichnet.

Durch die erfindungsgemäß aufgebaute Anordnung zur Authentifikation der Teilnehmerstationen bei der Schlüsselübertragung wird auch bei der Verwendung von symmetrischen Verschlüsselungsverfahren, bei denen bei jeder Verbindung ein besonderer Schlüssel vereinbart wird, die Authentizität der Teilnehmer sichergestellt. Das Gesamtsystem ist sicher gegenüber Angreifern jeder Art.

Die erfindungsgemäße Anordnung paßt sich flexibel an die verschiedenen Dienste eines Netzes für alle Kommunikationsdienste an. So wird in einer ersten Sicherheitsstufe vorzugsweise im Telefonverkehr über eine einfach aufgebaute Einrichtung der zeitliche Rahmen bei der Schlüsselübertragung überwacht und der verwendete Schlüssel in bit-reduzierter Form auf einem Display in den Teilnehmerstationen dargestellt. Die Schlüsseldarstellung ist dabei so gewählt, daß aus der reduzierten Form kein Rückschluß auf den Schlüssel selbst möglich ist. Dies kann z.B. dadurch erfolgen, daß in einer Hasch-Funktion z.B. das erste, fünfte und achte Bit des Schlüssels auf dem Display dargestellt wird, wobei dann die Teilnehmer über das Telefon die Werte der dargestellten Bits vergleichen und so die Authentizität überprüfen. Welche Werte dargestellt werden, kann z.B. in Form einer Parole vorvereinbart sein. Durch die Überwachung des zeitlichen Rahmens der Schlüsselübertragung selbst ist es möglich, maskierte Angreifer zu erkennen und entsprechend abzuwehren.

Diese Konfiguration der Anordnung ist insbesondere für die innerbetriebliche Kommunikation von Vorteil.

Um in vorteilhafter Weise eine automatische Verkehrsabwicklung, insbesondere bei der gesicherten Übertragung von Texten, Daten und Bildern zu gewährleisten, weist das Kommunikationssystem in einer zweiten Stufe eine Schlüssel-Management-Zentrale mit integriertem Schlüsselgerät auf. Diese Schlüssel-Management-Zentrale sichert den authentischen Verbindungsaufbau zwischen der sendenden und der empfangenden Station, wobei die Schlüssel-Management-Zentrale, im folgenden kurz SMZ bezeichnet, eine Art Relaisstation bildet und die eigentliche Schlüsselübertragung selbst nicht über diese SMZ erfolgt. Die SMZ enthält also im Gegensatz zu einer Schlüsselverteilerzentrale keinerlei Daten über den verwendeten Schlüssel (session key). Damit braucht bei einer Kommunikation die Schlüssel-ManagementZentrale nicht besonders abgesichert zu sein und kann z.B. auch als private Einrichtung im Netz installiert werden. Etwaige Manipulationen an der Schlüssel-Management-Zentrale können von den Teilnehmern frühzeitig erkannt werden.

Zur Sicherung der Verbindungswege zwischen der Schlüssel-Management-Zentrale und den Teilnehmern wird beim Verbindungsaufbau ein Identifikations-Nachrichtenblock übertragen, der vom sendenden Teilnehmer mit einem öffentlichen Schlüssel (public key) der SMZ verschlüsselt wird. Der von der SMZ entschlüsselte Nachrichtenblock wird dann erneut von der SMZ verschlüsselt und zwar entweder mit einem privaten Stationsschlüssel der SMZ oder zur Vermeidung einer frühzeitigen Verkehrsanalyse mit einem öffentlichen Schlüssel (public key) der empfangenden Station.

Das SMZ kennzeichnet also den von der sendenden Station an die empfangende Station zum Zwecke der Authentifikation übertragenen Nachrichtenblock. Damit ist es für einen Angreifer zwar möglich, den Inhalt der Nachricht, d.h. den Inhalt des Identifikations-Nachrichtenblockes zu erfassen, er kann deren Inhalt jedoch nicht unerkannt verändern. Die im Nachrichtenblock übertragene Information in Form von Authentifizierungscodewörtern (MAC) ermöglichen es dem empfangenden Teilnehmer bei der Schlüsselübertragung selbst den sendenden Teilnehmer zu identifizieren. Ein Rückschluß auf den vereinbarten Schlüssel aus den Authentifizierungscodewörtern ist nicht möglich.

Durch die Verwendung einer Schlüssel-Management-Zentrale läßt sich in offenen Kommunikationssystemen in einfacher und sicherer Weise die Authentizität der Teilnehmer sicherstellen. Für die Schlüsselübertragung selbst können beliebige kommutative Verschlüsselungsverfahren verwendet werden. Neben Verwendung des Systems bei dienstintegrierten Netzen ist die Verwendung in Mobilfunknetzen von Vorteil.

Ausführungsformen der Erfindung sind in den Zeichnungen dargestellt und werden im folgenden beispielsweise näher beschrieben. Es zeigen

Figur 1 ein schematisches Blockschaltbild einer Teilnehmerstation in einem Kommunikationssystem für mehrere Kommunikationsdienste mit zugeordneter Cryptoeinheit,

Figur 2 ein schematisches Blockschaltbild eines offenen Kommunikationssystems für mehrere Kommunikationsdienste mit integrierter Schlüssel-Management-Zentrale und

Figur 3 eine schematische Darstellung des strukturellen Aufbaues einer Schlüssel-Management-Zentrale.

In einem hier nicht im einzelnen dargestellten ISDN-Netz für alle Kommunikationsdienste werden sowohl Sprache als auch Text, Daten und Bilder auf digitaler Basis über eine Leitung übertragen. Alle Dienste eines Teilnehmers sind am selben Teilnehmer-Hauptanschluß über dieselbe Rufnummer erreichbar. Das Netz ist dabei so ausgebildet, daß neben den offenen auch verschlüsselte Nachrichten zwischen den Teilnehmern ausgetauscht werden können, wobei die Art der Verschlüsselung von der geforderten Sicherheitsstufe abhängt.

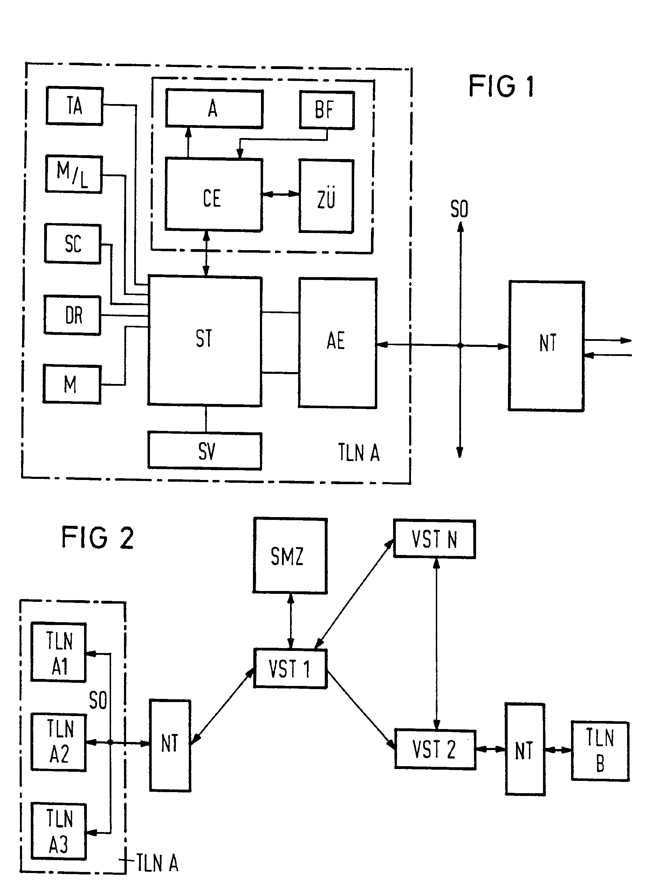

Jeder Teilnehmer des Netzes kann dabei mit jedem anderen Teilnehmer Nachrichten austauschen. Aus Gründen der Übersichtlichkeit sind in dem entsprechend der Figur 2 ausgestalteten Kommunikationsnetz nur zwei Hauptanschlüsse, nämlich TLN A und TLN B aufgeführt. Jeder einzelne Hauptanschluß kann je nach Ausbaustufe jedoch mehrere Nebenstellen TLN AI bis TLN A3 umfassen, die Bestandteil einer Nebensteller anlage sind. Den Hauptanschlüssen TLN A, TLN B zugeordnet sind üblicherweise jeweils Netzanschlußeinheiten NT. Der Verbindungsaufbau erfolgt über Vermittlungsstellen VST1 bis VSTn (Fig. 2). Weiterhin kann das Kommunikationsnetz eine Schlüssel-Management-Zentrale SMZ aufweisen, deren Funktion und Aufbau später erläutert wird.

Jeder Hauptanschluß enthält eine ISDN-Schnittstelle SO, über die mehrere Nebenstellen TLN AI bis TLN A3 miteinander verbunden sein können.

Ein Teilnehmerhauptanschluß TLN A weist gemäß Figur 1 eine Steuerung ST mit zugeordneter Stromversorgung SV auf. Mit der Steuerung ST verbunden sind die Ein-Ausgabegeräte, wobei die Art und die Zahl der Ein-Ausgabegeräte von der Art und der Zahl der verschiedenen Dienste des Kommunikationsnetzes abhängt. In dem angegebenen Ausführungsbeispiel der Figur 1 sind der Steuerung die folgenden Ein-Ausgabegeräte zugeordnet: Tastatur TA; Mikrofon/Lautsprechereinheit M/L; Abtasteinheit (Scanner) SC; Drucker DR und Monitor M. Zur Übertragung und zum Empfang verschlüsselter Nachrichten ist der Steuerung ST eine Cryptoeinheit CE zugeordnet, die über ein Bedienfeld BF bedient werden kann. Die Cryptoeinheit CE weist eine Anzeigeeinrichtung A zur Darstellung des übertragenen Schlüssels in reduzierter Form (HASH-Funktion) auf. Weiterhin ist eine Einrichtung zur Überwachung des zeitlichen Rahmens der Schlüsselübertragung ZÜ vorgesehen. Verbunden mit der ISDN-Schnittstelle SO ist die Steuerung ST und damit der Teilnehmerhauptanschluß TLN A über eine Anschlußeinheit AE.

Abhängig von der gewünschten Sicherheitsstufe der Schlüsselübertragung und/oder der Betriebsart der Teilnehmerstationen weist das Kommunikationsnetz eine entsprechend ausgestaltete Anordnung zur Authentifikation auf.

Diese Anordnung zur Authentifikation besteht in einer ersten Ausbaustufe, -vorzugsweise zur Sprachübertragung zwischen Nebenstellen TLN Al bis TLN A3-aus der beschriebenen Cryptoeinheit CE mit zugeordneter Anzeigeeinrichtung A zur teilnehmerseitigen Darstellung des vereinbarten Schlüssels in reduzierter Form (HASH-Funktion) und/oder der Einrichtung ZÜ zur Überwachung des zeitlichen Rahmens der Schlüsselübertragung.

Die Einrichtung ZÜ überwacht den zeitlichen Rahmen bei der Schlüsselübertragung und signalisiert eine Überschreitung bzw. Unterschreitung des vorgegebenen Rahmens am Bedienfeld BF. Eine derartige Überschreitung bzw. Abweichung vom Zeitrahmen kann dann auftreten, wenn sich ein maskierter Angreifer in das Netz einschaltet und einen anderen Teilnehmer imitiert.

Weiterhin kann die Anzeigeeinrichtung A in Form eines Displays ausgestattet sein, auf der z.B. je nach Vereinbarung der Teilnehmer untereinander das erste, fünfte und achte Bit des vereinbarten Schlüssels nach dem Schlüsselaustausch dargestellt wird.

Zur Authentifikation der Teilnehmer kann nach der Schlüsselübertragung eine kreuzweise Überprüfung über das Telefon dieser vereinbarten Bits und die Sprecherkennung dienen. Die Kommunikation mit einer niedrigen Sicherheitsstufe ist vorzugsweise für Sprachübertragung im Verkehr der Nebenstellen untereinander geeignet. Sie ist jedoch auch zwischen mehreren Hauptanschlüssen über das Kommunikationsnetz möglich.

Bei den beschriebenen Ausführungsbeispielen kommen symmetrische Verschlüsselungsverfahren zum Einsatz. Es ist jedoch allgemein auch möglich, andere Verschlüsselungsverfahren zu verwenden.

Bei den Schlüsselverteilverfahren sind von Bedeutung insbesondere das Dreipaßprotokoll (US-Patentschrift 45 67 600, 45 87 627) und das Verfahren mit Parole (Deutsche Patentschrift 31 23 168).

Für niedrige Sicherheitsstufen, vorzugsweise zur Sprachübertragung, wird nun die Erfindung anhand dieser beiden Schlüsselverteilverfahren näher erläutert.

Angenommen, der Teilnehmer TLN A möchte mit dem Teilnehmer TLN B unter Verwendung des Dreipaßprotokoll-Schlüsselverteilverfahrens über Telefon kommunizieren. Dann ergibt sich der folgende Ablauf:

Der Teilnehmer A erwürfelt sich zunächst den Stationsschlüssel (session key $SK_A$) der rufenden Station A sowie den Parameter $e_A$ und errechnet sich den Parameter $d_A$, wobei gilt, daß $e_A \times d_A = 1$ ist, wobei modulo $\varphi$ (M=P-1) gilt.

Nach Festlegung dieser Grundparameter durch die rufende Station A sendet die rufende Station A (TLN A) den mit Parameter $e_A$ und modulo P (mod P) verschlüsselten Stationsschlüssel $SK_A$ der Station A an den Teilnehmer B (TLN B).

$$(SK_A)^{e_A}_{\mathrm{mod}\ p}$$

Der Teilnehmer B erwürfelt sich einen Parameter $e_B$ und errechnet sich $d_B$. Sodann verschlüsselt der Teilnehmer TLN B den vom Teilnehmer A empfangenen Schlüssel $(SK_A)^{e_A}$ mit seinem eigenen Schlüssel $e_B$, modulo P (mod P) und sendet den so überschlüsselten Teilnehmer A-Schlüssel an den Teilnehmer A zurück.

$$\left[ (SK_A)^{e_A} \right]^{e_B}_{\mathrm{mod}\ p}$$

Der Teilnehmer A wiederum überschlüsselt den vom Teilnehmer B empfangenen Schlüsselblock mit $d_A$, mod P in der folgenden Weise

$$\left\{ \left[ (SK_A)^{e_A} \right]^{e_B} \right\}^{d_A}_{\mathrm{mod}\ p} = (SK_A)^{e_B}_{\mathrm{mod}\ p}$$

Der Teilnehmer B errechnet sich daraus gemäß

$$\left[ (SK_A)^{e_B} \right]^{d_B}_{\mathrm{mod}\ p} = SK_A$$

Damit sind beide Stationen im Schlüsselbesitz des Schlüssels $SK_A$ (session key) der Station A.

Zur Authentifikation der Teilnehmer wird mit Hilfe der Überwachungseinrichtung ZÜ der zeitliche Rahmen des Schlüsselaustausches überwacht. Diese Überwachungseinrichtung kann in üblicher Weise aufgebaut sein und erfaßt den vereinbarten und festgelegten zeitlichen Rahmen beim Schlüsselaustausch. Wird der zeitliche Rahmen überschritten, kann dies ein Indiz dafür sein, daß ein maskierter Angreifer sich in die Kommunikation eingeschaltet hat. Diese Überschreitung des zeitlichen Rahmens wird teilnehmerseitig auch bei der rufenden Station auf dem Bedienfeld BF dargestellt. Als zusätzliche Sicherheit oder getrennt davon wird nun der ausgetauschte Schlüssel im Rahmen einer HASH-Funktion in reduzierter Form auf dem Display A der beiden Teilnehmer dargestellt. Dies kann z.B. dadurch geschehen, daß vereinbarungsgemäß das erste, das fünfte und das achte Bit des Schlüssels bitweise auf der Anzeigeeinheit A erscheint und daß dann über das Telefon eine Überprüfung dieser Darstellung erfolgt.

Nachdem auf diese Weise die Authentizität der Teilnehmer überprüft wurde, erfolgt in einem nächsten Schritt die übliche Einphasung der Cryptogeneratoren bei dem dargestellten symmetrischen Verfahren und die verschlüsselte Nachrichtenübertragung kann beginnen.

Mit der erfindungsgemäßen Anordnung läßt sich auch ein Schlüsselverteilverfahren mit Parole entsprechend der deutschen Patentschrift 31 23 168 durchführen.

Dabei sind Parolen $P_0$, $P_4$, $P_5$ und $P_6$ z.B. in Form von Paßworten nur bei Teilnehmer A und Teilnehmer B bekannt. Weiterhin ist wie beim vorhergehenden Verfahren p der Primzahlkörper im Netz bekannt.

Entsprechend dem vorher beschriebenen Verfahren erwürfelt sich die rufende Station (TLN A) zunächst den Stationsschlüssel $SK_A$ und den Wert $e_A$ und errechnet sich $d_A$. Sodann sendet der Teilnehmer TLN A diesen so erwürfelten Stationsschlüssel $SK_A$ entsprechend der nachfolgenden Funktion verschlüsselt an Teilnehmer B.

$$\left[ (SK_A \bmod 2\ P_0)^{e_A}{}_{\bmod\ p} \bmod 2\ P_4 \right]$$

Der Teilnehmer B erwürfelt sich der Wert $e_B$ und errechnet sich $d_A$. Sodann sendet der Teilnehmer B den vom Teilnehmer A erhaltenen verschlüsselten Schlüssel überschlüsselt an Teilnehmer A zurück und zwar entsprechend der Funktion

$$\left[ (SK_A \bmod 2\ P_0)^{e_A}{}_{\bmod\ p} \bmod 2\ P_4 \bmod 2\ P_4 \right]^{e_B}{}_{\bmod\ p} \bmod 2\ P_5$$

Hierbei ist zu beachten, daß mod 2 $P_4$ mod 2 $P_4$ identisch Null ist.

In einem Folgeschritt sendet der Teilnehmer A den vom Teilnehmer B verschlüsselten Schlüsselblock erneut entsprechend der folgenden Funktion an den Teilnehmer B.

$$\left\{\left\{\left[ \left((SK_A \bmod 2\ P_0)^{e_A}\right)^{e_B}{}_{\bmod\ p} \bmod 2\ P_5 \right] \bmod 2\ P_5 \right\}^{d_A}{}_{\bmod\ p} \bmod 2\ P_6 \right\}$$
$$= \left[ (SK_A \bmod 2\ P_0)^{e_B}{}_{\bmod\ p} \bmod 2\ P_6 \right]$$

Daraus ergibt sich durch Addition mod 2 von $P_6$ und durch Potenzieren mit $d_B$

$$\left\{ \left[ (SK_A \bmod 2\ P_0)^{e_B} \bmod 2\ P_6 \right] \bmod 2\ P_6 \right\}^{d_B} = SK_A \bmod 2\ P_0$$

Addiert man hierzu $P_0$, läßt sich $SK_A$, nämlich der Stationsschlüssel (session key) der rufenden Station errechnen. Nunmehr sind beide Teilnehmer im Besitz des Schlüssels, wobei auch hier die Zeitüberwachungsanordnung ZÜ über das vorgegebene Zeitfenster den Schlüsselaustausch überwacht und bei Überschreiten des Zeitfensters an dem Bedienfeld BF eine Warneinrichtung aktiviert.

In einem nächsten Schritt wird der vereinbarte Schlüssel auf den teilnehmerseitigen Anzeigen bitweise reduziert über eine HASH-Funktion dargestellt und kann über die Telefonleitung durch einzelnen Aufruf der Bits überprüft werden. Nach Überprüfung der Authenzität der Teilnehmer erfolgt die übliche Einphasung der Cryptogeneratoren und die Übertragung der verschlüsselten Nachrichten.

Mit den beiden vorstehend beschriebenen Verfahren unter Anwendung der erfindungsgemäßen Authentifikationsanordnung läßt sich in einer ersten Sicherheitsstufe eine Schlüsselübertragung durchführen, bei der z.B. über Sprache eine Authentifikation der Teilnehmer möglich ist. Eine maschinelle Authentifikation der Teilnehmer ist nicht möglich.

Eine derartige maschinelle Authentifikation der Teilnehmer läßt sich dadurch bewerkstelligen, daß gemäß Fig. 2 im Kommunikationssystem eine Schlüssel-Management-Zentrale mit integriertem Schlüsselgerät SMZ angeordnet ist. Diese Schlüssel-Management-Zentrale SMZ ermöglicht eine automatische Verkehrsabwicklung, insbesondere bei der Übertragung von Texten, Daten und Bildern. Die Schlüssel-ManagementZentrale sichert den authentischen Verbindungsaufbau zwischen der sendenden und der empfangenden Station, wobei die Schlüssel-Management-Zentrale eine Art Relaisstation bildet und die eigentliche Schlüsselübertragung selbst nicht über diese Schlüssel-Management-Zentrale erfolgt. Im Gegensatz zu der bekannten Schlüsselverteilerzentrale enthält eine Schlüssel-Management-Zentrale keine Daten über den verwendeten Schlüssel, sondern sie entspricht eher einer Vermittlungsstelle. Die Schlüssel-Management-Zentrale kennzeichnet den von der sendenden Station an die empfangende Station zum Zwecke der Authentifikation übertragenen Nachrichtenblock und sichert so die Authentifikation.

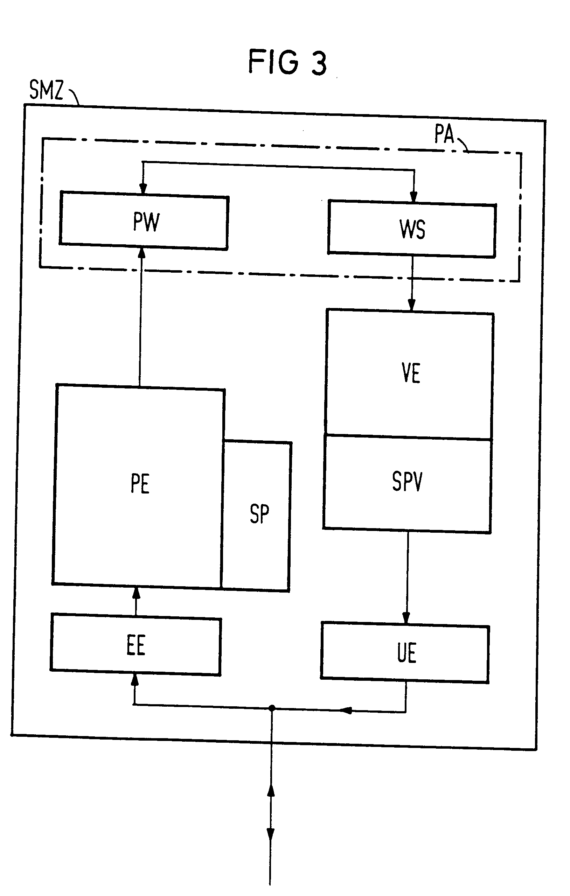

Dies erfolgt im allgemeinsten Falle dadurch, daß zunächst der Teilnehmer A, d.h. die rufende Station A zunächst den Stationsschlüssel SKA erwürfelt und errechnet mit diesem einen Authentifizierungscode (MAC-Zahl) der zu übertragenden Nachricht und der Prüffolge. Aus diesen Authentifizierungscodes bildet die rufende Station Teilnehmer A einen Identifikations-Nachrichtenblock mit darin enthaltenem Identifizierungscode zur Identifizierung des rufenden und gerufenen Teilnehmers B. Sodann wird der Identifikations-Nachrichtenblock mit einem ersten Schlüssel, der z.B. ein öffentlicher Schlüssel des Schlüssel-Management-Zentrums SMZ sein kann, verschlüsselt, zur Schlüssel-Management-Zentrale SMZ übertragen. Die Schlüssel-Management-Zentrale SMZ entschlüsselt den Identifikations-Nachrichtenblock, überprüft die Angaben von TlnA, modifiziert den Identifikationsnachrichtenblock und sendet den Identifikations-Nachrichtenblock mit einem zweiten Schlüssel verschlüsselt, der z.B. ein Stationsschlüssel (secret key) des Schlüssel-Management-Zentrums SMZ sein kann, an den Teilnehmer B, nämlich die empfangende Station. Sodann meldet sich die empfangende Station nach Auswertung des Nachrichtenblockes bei der Station A zur eigentlichen Schlüsselübertragung des vereinbarten Schlüssels. Zu dieser eigentlichen Schlüsselübertragung können dann die unterschiedlichsten Schlüsselübertragungsverfahren verwendet werden. Nach der Einphasung der Cryptogeneratoren wird bei symmetrischen Cryptoverfahren vom Teilnehmer A an den Teilnehmer B eine Fehlerprüfsequenz CS übertragen. Der Teilnehmer B kann dann mit dem vorher empfangenen Authentifizierungscode (MAC-Zahl) verifizieren, ob der Teilnehmer A tatsächlich sein momentaner Partner ist. Aus diesem prinzipiellen Ablauf der Authentifikation ergibt sich auch der Aufbau eines derartigen Schlüssel-Management-Zentrums: Es enthält eine Speichereinrichtung mit Prüfeinheit zur Aufnahme und Auswertung des von der rufenden Station A gesendeten Identifikations-Nachrichtenblockes sowie ein Schlüsselgerät zum Ver- und Entschlüsseln. Weiterhin eine automatische Rufeinrichtung zur Herstellung der Verbindung zwischen SMZ und dem gerufenen Teilnehmer. Eine detaillierte Beschreibung des Aufbaues erfolgt im Zusammenhang mit der Figur 3.

Verwendet man in einem offenen Kommunikationssystem der beschriebenen Art mit einer Schlüssel-Management-Zentrale ein Verfahren mit Dreipaßprotokoll entsprechend der US-Patentschrift 45 67 690 bzw. 45 87 627, so ergeben sich für die Authentifikation und die Schlüsselübertragung im einzelnen die folgenden Verfahrensschritte:

Bei der funktionellen Kurzdarstellung werden dabei die folgenden Abkürzungen verwendet:

SMZ: Schlüssel-Management-Zentrale; $PK_{SMZ}$: öffentlicher Schlüssel der Schlüssel-Management-Zentrale; $SK_{SMZ}$: Stationsschlüssel (secret key) der Schlüssel-Management-Zentrale;

CS: Fehlerprüfsequenz; MAC: Nachrichten-Authentifizierungscode (message authentication-code); $P_0, P_4, P_5, P_6$: Parolen (Paßworte), die den betroffenen Teilnehmern (TLN A, TLN B) bekannt sind; CRC: zyklisch redundantes Prüfwort (cyclic redundancy check word); DU: Datum/Uhrzeit.

Bei der Darstellung des Verfahrens ist zu beachten, daß je nach Art des verwendeten Verschlüsselungsverfahrens die Zusammensetzung des übertragenen Identifikations-Nachrichtenblockes unterschiedlich sein kann. Wichtig ist dabei jedoch, daß vor der eigentlichen Schlüsselübertragung eine Authentifizierung der Teilnehmer erfolgt.

Bei einem Dreipaßprotokoll-Verfahren stellt sich dies wie folgt dar:

Der Teilnehmer TLN A erwürfelt sich den Stationsschlüssel $SK_A$ und die Funktion $e_A$. Weiterhin bestimmt

6

er z.B. die Parolen $P_0$, $P_4$, $P_5$, $P_6$ und legt die Fehlerprüfsequenz CS fest. Danach errechnet er sich die Funktion $d_A$ sowie den Authentifizierungscode (MAC), der eine Funktion der Fehlerprüfsequenz und des Verbindungsschlüssels $SK_A$ ist.

$$MAC (CS, SK_A)$$

Weiterhin bestimmt er bedarfsweise das zyklisch redundante Prüfwort (cyclic redundency checkword) CRC als Funktion von: Teilnehmer TLN A, Teilnehmer TLN B; Parolen; Priorität, Datum/Uhrzeit DU, Authentifizierungscode MAC (Text, $SK_A$); Authenfizierungscode MAC (CS, $SK_A$).

Nach Festlegung der Parameter auf Seiten des Teilnehmers A sendet der Teilnehmer A einen aus diesen Parametern gebildeten Identifikations-Nachrichtenblock mit darin enthaltenem Identifizierungscode zur Identifikation der Teilnehmer TLN A und TLN B der im folgenden mit dem Teilnehmernamen TLN A und TLN B bezeichnet wird. Dieser Identifizierungscode ist eine Information für die Schlüssel-Management-Zentrale, um den vom Teilnehmer A ausgesandten Identifikations-Nachrichtenblock als den von Teilnehmer A wirklich ausgesandten zu erkennen und modifiziert an den Teilnehmer B weiterleiten zu können. Der Identifikations-Nachrichtenblock kann dabei den folgenden Aufbau haben:

$$\{TLN\ A;\ TLN\ B;\ P_{0,4,5,6};\ Priorität;\ DU,\ MAC\ (Text,\ SK_A);\ MAC\ (CS,\ SK_A);\ CRC\}_{PK_{SMZ}}$$

Dieser so mit dem öffentlichen Schlüssel der SchlüsselManagement-Zentrale beim Übertragen vom Teilnehmer A zur Schlüssel-Management-Zentrale verschlüsselte Identifikations-Nachrichtenblock wird in der Schlüssel-Management-Zentrale SMZ mit Hilfe des darin angeordneten Schlüsselgerätes entschlüsselt, modifiziert und mit Hilfe eines Stationsschlüssels (secret key) der Schlüssel-Management-Zentrale erneut verschlüsselt und dann entsprechend der folgenden Funktion an den Teilnehmer B übertragen:

$$\{TLN\ A;\ TLN\ B;\ P_{0,4,5,6};\ Priorität;\ DU,\ MAC\ (text,\ SK_A);\ MAC\ (CS,\ SK_A),\ CRC\}_{SK_{SMZ}}$$

Nach dem Empfang des Identifikations-Nachrichtenblockes in der empfangenden Station TLN B, meldet sich der Teilnehmer B beim Teilnehmer A durch Zuordnung einer gespeicherten Rufnummer zum Identifizierungscode zur eigentlichen Schlüsselübertragung. Die eigentliche Schlüsselübertragung kann dabei nun entsprechend dem vorher beschriebenen Dreipaßprotokoll oder unter Verwendung von Parolen entsprechend dem Verfahren der Deutschen Patentschrift 21 23 168 erfolgen.

Nach der Einphasung der Cryptogeneratoren übermittelt der Teilnehmer A an den Teilnehmer B die Feherprüfsequenz CS. Der Teilnehmer B kann mit dem vorher empfangenen Authentifizierungscode MAC (CS, $SK_A$) verifizieren, ob der Teilnehmer A tatsächlich sein momentaner Partner ist. Damit ist eine vollständige Authentifizierung beider Teilnehmer sichergestellt.

Durch Mithören und Entschlüsseln des Identifikations-Nachrichtenblockes bei der Übertragung von der Schlüssel-Management-Zentrale SMZ zum Teilnehmer B ist unter Umständen eine frühzeitige Verkehrsanalyse möglich. Diese Analyse hat jedoch keinen Einfluß auf die Authentifizierung, da ein Angreifer zwar entsprechend einem Schaufenstereffekt den Inhalt des Identifikations-Nachrichtenblockes lesen, jedoch nicht verändern kann. Damit kann ein Angreifer auf die Authentifizierung der Teilnehmer keinen Einfluß nehmen.

Soll jedoch auch eine frühzeitige Verkehrsanalyse unmöglich gemacht werden, so kann das beschriebene Verfahren dahingehend verändert werden, daß man bei der Übertragung des Identifikations-Nachrichtenblockes von der SchlüsselManagement-Zentrale SMZ zum Teilnehmer B den Identifikations-Nachrichtenblock nicht mit dem Stationsschlüssel $SK_{SMZ}$ der Schlüssel-Management-Zentrale SMZ verschlüsselt, sondern dazu den öffentlichen Schlüssel (public key) des Teilnehmers TLN B, nämlich $PK_{TLN\ B}$ verwendet. Damit ist zum einen ein höherer Aufwand in der Schlüssel-Management-Zentrale notwendig, nämlich z.B. zur Pflege der Listen der öffentlichen Schlüssel der Teilnehmer, aber es wird zum anderen die vorzeitige Verkehrsanalyse im Netz unmöglich gemacht. Innerhalb der Schlüssel-Management-Zentrale selbst ist nur eine Verkehrsanaylse möglich, jedoch keine Entschlüsselung der Nachrichten, da die eigentliche Übertragung der verschlüsselten Nachrichten unabhängig von der Schlüssel-Management-Zentrale erfolgt.

Die beschriebene Schlüssel-Management-Zentrale SMZ kann nun entsprechend der Figur 3 aufgebaut sein.

Sie ist mikroprozessorgesteuert und enthält eine üblicherweise aufgebaute Entschlüsselungseinheit EE zum Entschlüsseln des vom Teilnehmer A eingehenden Identifikations-Nachrichtenblockes mit dem entsprechenden Schlüssel, z.B. $SK_{SMZ}$. Weiterhin eine Prüfeinheit PE zur Prüfung der Authentizität des rufenden Teilnehmers A z.B. durch Entschlüsselung des Identitätskennzeichens mit dem $PK_{TLNA}$. Dies muß das Datum, die Laufnummer, die geheime Stationsnummer und die Teilnehmernummer ergeben.

Mit der Prüfeinheit PE funktionell verbunden ist ein Speicher SP. Er enthält ein Verzeichnis der Teilnehmer (TLN A) sowie z.B. den $PK_{TLNA}$, die letzte Laufnummer und die geheime Stationsnummer. Bei einer Modifikation der Schlüssel- Management-Zentrale SMZ ist es auch möglich, eine Anordnung PA zur Prioritätsauswertung PW mit zugehöriger Warteschlange WS (Speicher) vorzusehen. Dies ist vorteilhaft, wenn eine Vielzahl von Teilnehmern im Netz vorhanden sind. Die Anordnung PA kann dabei ebenfalls in üblicher Weise aufgebaut sein.

Zur Verschlüsselung des Identifikations-Nachrichtenblockes mit den Schlüsseln $SK_{SMZ}$ oder $PK_{TLNB}$ ist eine Verschlüsselungseinheit VE vorgesehen. Wird zum Verschlüsseln der Public Key des gerufenen Teilnehmers $PK_{TLNB}$ verwendet, so enthält die Verschlüsselungseinheit VE einen Speicher SPV zur Aufnahme eines Verzeichnisses der Teilnehmer (TLNB) mit zugehörig $PK_{TLNB}$. Eine mit der Verschlüsselungseinheit VE verbundene Übertragungseinheit (Modem) UE dient als automatische Rufeinrichtung zur Herstellung der Verbindung zwischen SMZ und dem gerufenen Teilnehmer TLNB.

## Patentansprüche

1. Anordnung zur Schlüsselübertragung in einem offenen Kommunikationssystem mit einer Vielzahl von Teilnehmerstationen (TLN A, TLN B), bei dem zwischen einer sendenden und einer empfangenden Station zur verschlüsselten Übertragung von Nachrichten ein Schlüssel vereinbart wird und bei dem in der sendenden und in der empfangenden Station jeweils ein Schlüsselgerät (CE) vorgesehen ist, dem ein Stationsschlüssel ($SK_A$) zugeordnet ist,
   **gekennzeichnet durch** die folgenden Merkmale:
   a) das Kommunikationssystem weist eine Anordnung zur Authentifikation (A, ZÜ, SMZ) der Teilnehmerstationen bei der Schlüsselübertragung auf,
   b) in Abhängigkeit von der gewünschten Sicherheitsstufe der Schlüsselübertragung und/oder der Betriebsart der Teilnehmerstationen (TLN A, TLN B) weist die Anordnung zur Authentifikation eine entsprechende Struktur auf, und zwar
   c) in einer ersten Stufe vorzugsweise zur Sprachübertragung eine Einrichtung zur Überwachung des zeitlichen Rahmens der Schlüsselübertragung (ZÜ) und/oder eine Anordnung zur teilnehmerseitigen Darstellung des vereinbarten Schlüssels in reduzierter Form (HASH-Funktion) (A),
   d) in einer zweiten Stufe zur automatischen Verkehrsabwicklung eine Schlüssel-Management-Zentrale (SMZ) mit integriertem Schlüsselgerät, die vor der eigentlichen Schlüsselübertragung einen von der sendenden Station (TLN A) mit einem ersten Schlüssel ($PK_{SMZ}$) verschlüsselten Identifikations-Nachrichtenblock übernimmt und mit einem zweiten Schlüssel ($SK_{SMZ}$, $PK_{TLN\,B}$) verschlüsselt an die empfangende Station (TLN B) weiterleitet, wobei der Identifikations-Nachrichtenblock die sendende und die empfangende Station addressierende Codewörter (TLN A, TLN B) und aus dem vereinbarten Schlüssel abgeleitete Authentifizierungs-Codewörter (MAC) einer Prüffolge aufweist.

2. Anordnung nach Anspruch 1, **dadurch gekennzeichnet**, daß als erster Schlüssel ein der Schlüssel-Management-Zentrale zugeordneter öffentlicher Schlüssel ($PK_{SMZ}$) verwendet wird.

3. Anordnung nach Anspruch 2, **dadurch gekennzeichnet**, daß als zweiter Schlüssel ein der Schlüssel-Management-Zentrale zugeordneter privater Schlüssel ($SK_{SMZ}$) verwendet wird.

4. Anordnung nach Anspruch 2, **dadurch gekennzeichnet**, daß als zweiter Schlüssel ein der empfangenden Station zugeordneter öffentlicher Schlüssel ($PK_{TLN\,B}$) verwendet wird.

5. Anordnung nach Anspruch 1 - 4, **dadurch gekennzeichnet**, daß das offene Kommunikationssystem als Kommunikationssystem (ISDN) für mehrere Kommunikationsdienste ausgebildet ist, bei dem jede Teilnehmerstation (TLN A, TLN B) eine Vielzahl von Endgeräten (TA, SC,M) unterschiedlicher Funktion aufweisen kann.

6. Anordnung nach Anspruch 1 - 4, **dadurch gekennzeichnet**, daß die Anordnung in einem Mobilfunknetz verwendet wird.

7. Verfahren zur Schlüsselübertragung in einem offenen Kommunikationssystem mit einer Vielzahl von Teilnehmerstationen (TLN A, TLN B), bei dem zwischen einer sendenden und einer empfangenden Station zur verschlüsselten Übertragung von Nachrichten ein Schlüssel vereinbart wird und bei dem in der sendenden und der empfangenden Station jeweils ein Schlüsselgerät (CE) vorgesehen ist, und mit einer Schlüssel-ManagementZentrale (SMZ), gekennzeichnet durch die folgenden Merkmale:
   a) die sendende Station (TNL A) bestimmt den zu vereinbarenden Schlüssel (session key) ($SK_A$), errechnet hierzu einen Authentifizierungscode (MAC) und bildet einen Identifikations-Nachrichtenblock mit darin enthaltenem Identifizierungscode der Teilnehmer (TLN A, TLN B),
   b) der Identifikations-Nachrichtenblock wird von der sendenden Station (TLN A) mit einem ersten Schlüssel (PK$_{SMZ}$) verschlüsselt und zur Schlüssel-Management-Zentrale (SMZ) übertragen,

c) die Schlüssel-Management-Zentrale (SMZ) entschlüsselt den Identifikations-Nachrichtenblock, prüft die Authentizität des Teilnehmers A und sendet den (modifizierten) Identifikations-Nachrichtenblock mit einem zweiten Schlüssel (SK$_{SMZ}$, PK$_{TLN B}$) verschlüsselt an die empfangende Station (TLN B) und

d) die empfangende Station (TLN B) meldet sich bei der sendenden Station (TLN A) zur Schlüsselübertragung des vereinbarten Schlüssels.

## Claims

1. Arrangement for key transmission in a public communication system having a plurality of subscriber stations (TLN A, TLN B), in which a key is agreed between a transmitting and a receiving station for the encrypted transmission of messages, and in which a cryptographic device (CE) is provided in the transmitting and in the receiving station in each case, to which device a station key (SK$_A$) is assigned, characterized by the following features:

   a) the communication system has an arrangement for authentification (A, ZÜ, SMZ) of the subscriber stations for the key transmission,

   b) depending on the desired security level of the key transmission and/or the operating mode of the subscriber stations (TLN A, TLN B), the arrangement for authentification has a corresponding structure, to be precise

   c) on a first level preferably for voice communications, a device for monitoring the time frame of the key transmission (ZÜ) and/or an arrangement for the indication of the agreed key in reduced form (HASH function) (A) at the subscriber end,

   d) on a second level for automatic traffic handling, a key management station (SMZ) with integrated cryptographic device which, before the actual key transmission, receives an identification message block encrypted with a first key (PK$_{SMZ}$) from the transmitting station (TLN A) and forwards it encrypted with a second key (SK$_{SMZ}$, PK$_{TLN B}$) to the receiving station (TLN B), in which the identification message block has code words (TLN A, TLN B) addressing the transmitting and receiving station and authentification code words (MAC), derived from the agreed key, of a checking sequence.

2. Arrangement according to claim 1, characterized in that a public key (PK$_{SMZ}$) assigned to the key management station is used as first key.

3. Arrangement according to claim 2, characterized in that a private key (SK$_{SMZ}$) assigned to the key management station is used as second key.

4. Arrangement according to claim 2, characterized in that a public key (PK$_{TLN B}$) assigned to the receiving station is used as second key.

5. Arrangement according to claim 1 to 4, characterized in that the public communication system is designed as a communication system (ISDN) for a plurality of communication services, in which each subscriber station (TLN A, TLN B) can have a multiplicity of terminals (TA, SC, M) with different functions.

6. Arrangement according to claim 1 to 4, characterized in that the arrangement is used in a mobile radio network.

7. Method for key transmission in a public communication system having a plurality of subscriber stations (TLN A, TLN B), in which a key is agreed between a transmitting and a receiving station for the encrypted transmission of messages, and in which a cryptographic device (CE) is provided in the transmitting and the receiving station in each case, and having a key management station (SMZ), characterized by the following features:

   a) the transmitting station (TLN A) specifies the key (session key) (SK$_A$) to be agreed, calculates an authentification code (MAC) for this and forms an identification message block with the identification code of the subscribers (TLN A, TLN B) contained therein,

   b) the identification message block is encrypted by the transmitting station (TLN A) with a first key (PK$_{SMZ}$) and transmitted to the key management station (SMZ),

   c) the key management station (SMZ) decrypts the identification message block, checks the authenticity of the subscriber A and transmits the (modified) identification message block encrypted with a second key (SK$_{SMZ}$, PK$_{TLN\ B}$) to the receiving station (TLN B), and
d) the receiving station (TLN B) notifies the transmitting station (TLN A) for the key transmission of the agreed key.

**Revendications**

1.  Dispositif de transmission de codes dans un système de communication ouvert ayant plusieurs postes (TLN A, TLN B) d'abonné, dans lequel on spécifie entre un poste émetteur et un poste récepteur un code pour transmettre des informations de façon codée et dans lequel on prévoit, dans le poste émetteur et dans le poste récepteur, respectivement un appareil (CE) de codage, auquel est associé un code (SK$_A$) de poste, caractérisé de la façon suivante :
    a) le système de communication comporte un dispositif (A, ZÜ, SMZ) d'authentification des postes d'abonné lors de la transmission de codes,
    b) en fonction de la sûreté souhaitée de la transmission de codes et/ou du mode de fonctionnement des postes (TLN A, TLN B) d'abonné, le dispositif d'authentification comporte une structure correspondante, et aussi
    c) une installation (ZÜ) destinée à contrôler la trame temporelle de la transmission de codes, dans un premier étage destiné de préférence à transmettre la parole, et/ou un dispositif (A) destiné à représenter, du côté abonné, sous forme réduite (fonction HASH), le code spécifié,
    d) dans un deuxième étage d'écoulement automatique de trafic, un central (SMZ) de gestion de codes, qui a un appareil de codage intégré et qui prend en charge avant la transmission de codes proprement dite un bloc d'informations d'identification codé avec un premier code (PK$_{SMZ}$) par le poste (TLN A) émetteur et le retransmet avec un deuxième code (SK$_{SMZ}$, PK$_{TLN\ B}$) façon codée au poste (TLN B) récepteur, le bloc d'informations d'identification comprenant des mots de code (TLN A, TLN B) d'adresse des postes émetteur et récepteur, et des mots (MAC) de code d'authentification dérivés du code spécifié, d'une séquence de test.

2.  Dispositif suivant la revendication 1, caractérisé en ce que l'on utilise comme premier code un code (PK$_{SMZ}$) public associé au central de gestion de codes.

3.  Dispositif suivant la revendication 2, caractérisé en ce que l'on utilise comme deuxième code un code (SK$_{SMZ}$) privé associé au central de gestion de codes.

4.  Dispositif suivant la revendication 2, caractérisé en ce que l'on utilise comme deuxième code un code (PK$_{TLN\ B}$) public associé au poste récepteur.

5.  Dispositif suivant les revendications 1 à 4, caractérisé en ce que le système ouvert de communication a la forme d'un système (RNIS) de communication pour plusieurs services de communication, dans lequel chaque poste (TLN A, TLN B) peut avoir plusieurs terminaux (TA, SC, M) de fonction différente.

6.  Dispositif suivant les revendications 1 à 4, caractérisé en ce que l'on utilise le dispositif dans un réseau de radiocommunication mobile.

7.  Procédé de transmission de codes dans un système de communication ouvert ayant plusieurs postes (TLN A, TLN B) d'abonné, dans lequel on spécifie entre un poste émetteur et un poste récepteur un code pour transmettre des informations de façon codée et dans lequel on prévoit entre le poste émetteur et le poste récepteur respectivement un appareil (CE) de codage, et ayant un central (SMZ) de gestion de codes, caractérisé de la façon suivante :
    a) le poste (TLN A) émetteur détermine le code (session key) (SK$_A$) à spécifier, calcule à cet effet un code (MAC) d'authentification et forme un bloc d'informations d'identification, qui comprend un code d'identification des abonnés (TLN A, TLN B),
    b) le bloc d'informations d'identification est codé par le poste (TLN A) récepteur avec un premier code (PK$_{SMZ}$) et est transmis au central (SMZ) de gestion de codes,
    c) le central (SMZ) de gestion de codes décode le bloc d'informations d'identification, vérifie l'authenticité de l'abonné A et émet de façon codée le bloc d'informations d'identification (modifié) au poste (TLN B) récepteur avec un deuxième code (SK$_{SMZ}$, PK$_{TLN\ B}$) et
    d) le poste (TLN B) récepteur se signale au poste (TLN A) émetteur pour la transmission du code spécifié.

FIG 1

| | | |
|---|---|---|
| TA | A | BF |
| M/L | CE | ZÜ |
| SC | | |
| DR | ST | AE |
| M | | |
| | SV | |

SO

NT

TLN A

FIG 2

SMZ

VST N

TLN A1

SO

TLN A2

NT

VST 1

TLN A3

TLN A

VST 2

NT

TLN B

# FIG 3